# NOUVEAU FASCICULE DE BREVET EUROPEEN

(11) **EP 3 397 919 B2**
(45) Date de publication et mention de la décision concernant l'opposition: **03.08.2022**
(45) Mention de la délivrance du brevet: 16.10.2019
(21) Numéro de dépôt: 16809886.1
(22) Date de dépôt: 16.12.2016
(51) Int. Cl.: F41G 3/26, G09B 9/00, G09B 9/04

(54) **PROCÉDÉ ET DISPOSITIF DE SIMULATION DE TOURELLE**
VERFAHREN UND VORRICHTUNG ZUR TURMSIMULATION
TURRET SIMULATION METHOD AND DEVICE

(30) Priorité: 30.12.2015 BE 201505852
(43) Date de publication de la demande: 07.11.2018
(73) Titulaire: John Cockerill Defense S.A., 4431 Ans (BE)
(72) Inventeur: CLERMONT, Bernard, 4624 Fléron (BE); BALTHASART, Pierre, 4140 Sprimont (BE); BASTIAENS, Patrice, 4053 Embourg (BE)
(74) Mandataire: AWA Benelux
(86) Numéro de dépôt international: PCT/EP2016/081552
(87) Numéro de publication internationale: WO 2017/114671

(56) Documents cités:
- EP-A2- 0 947 797
- EP-A2- 2 418 635
- FR-A1- 2 420 737
- US-A- 4 789 339

## Description

### Domaine Technique

De manière générale, l'invention concerne un procédé de simulation immersive pour la formation et l'entraînement d'un équipage à l'utilisation d'une tourelle de véhicule blindé. L'invention se rapporte en outre à un système comprenant une tourelle configurée pour la mise en oeuvre de ce procédé.

### Arrière-plan technologique

Pour la formation et l'entraînement des militaires à l'utilisation des tourelles montées sur véhicules blindés, il est connu d'utiliser des simulateurs sur ordinateur personnel où l'utilisateur est confronté à divers scénarios.

Il est également connu d'utiliser le véhicule en tant que tel comme espace de simulation. Ces simulations dites embarquées permettent de coller au plus près des conditions réelles du terrain. Outre leur potentiel de réalisme plus élevé, les simulations embarquées présentent l'avantage qu'elles permettent d'utiliser des ressources matérielles de réserve. En ce qui concerne les véhicules blindés, il est un fait qu'en temps de paix, seulement une petite partie du parc de véhicules est opérationnelle et utilisée essentiellement pour des manoeuvres sur le terrain, le reste des véhicules étant garés dans les hangars et les dépôts. Grâce aux simulations embarquées, il est possible d'exploiter ces ressources dormantes à des fins de formation et d'entraînement à des coûts beaucoup moins importants que ceux de l'acquisition et de maintenance d'un parc de simulateurs matériels au réalisme le plus approchant des systèmes.

Le document FR 2 420 737 décrit un dispositif pour la formation du pointeur (ou tireur, en anglais : « gunner ») d'un véhicule blindé où le véhicule est utilisé comme simulateur. Dans ce dispositif, une image représentant la cible est projetée dans le système optique de visée du pointeur. En actionnant la manette de pointage, l'utilisateur peut viser et poursuivre la cible représentée. Pour reproduire au mieux les conditions réelles, le dispositif peut être équipé de haut-parleurs pour simuler les bruits du véhicule. Par ailleurs, le dispositif est capable de superposer des mouvements de la cible dans le viseur qui simulent le mouvement propre du véhicule sur un terrain plus ou moins accidenté.

Ensuite, un procédé de formation plus élaboré pour véhicules blindés a été divulgué dans le document EP 0 947 797 A2. Dans ce document, un ordinateur de simulation est connecté à l'ordinateur central du véhicule et, en mode simulation, les écrans du véhicule montrent les données de simulation traitées par l'ordinateur central et par l'ordinateur de simulation ainsi que les données sur les fonctions activées par l'élève. Dans le mode simulation, toutes les fonctions d'opération et de mouvement du véhicule, comme celles du moteur, de la direction, du système d'armement, etc., sont bloquées alors que toutes les interfaces d'acquisition du véhicule restent opérationnelles. Dans ce dispositif, il incombe uniquement à l'ordinateur de simulation de prendre en charge le calcul du nouvel état du système sur base des entrées de l'élève. Cela a pour désavantage que toutes les fonctions d'exploitation doivent être reproduites dans l'ordinateur de simulation.

Le document EP 1 715 285 A1, qui critique cet inconvénient, propose une solution selon laquelle l'ordinateur de simulation envoie les données de simulation à l'ordinateur central et c'est ce dernier qui calcule le nouvel état du système.

Il reste toutefois un désavantage aussi bien du dispositif du document EP 0 947 797 A2 que de celui du document EP 1 715 285 A1 que le réalisme de la simulation laisse à désirer.

Le document EP 2 418 635 enseigne une alternative au système du EP 0 947 797 A2, plus adapté aux véhicules blindés plus anciens, en particulier des véhicules blindés qui ne sont pas équipés d'un système de bus informatique.

Le document US 4,789,339 décrit un équipement d'entraînement portable pouvant être connecté à un véhicule blindé pour faire du véhicule blindé l'interface entre la simulation et l'équipage.

### Problème technique

Un objectif d'un aspect de la présente invention est d'améliorer le potentiel du réalisme d'une simulation immersive d'une tourelle de véhicule blindé.

### Description générale de l'invention

Un premier aspect de l'invention concerne un procédé de simulation immersive selon la revendication 1, pour la formation et l'entraînement d'un équipage à l'utilisation d'une tourelle de véhicule blindé produisant des stimulus de plusieurs types de perceptions sensorielles humaines. Il est supposé que la tourelle comprend un ordinateur de contrôle, ainsi que des interfaces d'acquisition pour la commande d'équipements de la tourelle et des interfaces de restitution pour la présentation de données à l'équipage, l'ordinateur de contrôle ainsi que les interfaces d'acquisition et les interfaces de restitution étant connectés entre eux par un bus informatique (ou bus numérique). Le procédé comprend les actions suivantes :
∘ une tourelle de véhicule blindé comme décrite ci-dessus est fournie ;
∘ l'ordinateur de contrôle est connecté à un ordinateur de simulation, auquel l'ordinateur de contrôle communique l'état de la tourelle ;
∘ l'ordinateur de simulation produit un environnement virtuel qui est présenté au moins en partie à l'équipage par le biais des interfaces de restitution ;
∘ un ou plusieurs équipements motorisés de la tourelle se trouvent en état de marche ; et
∘ les commandes entrées par l'équipage via les interfaces d'acquisition à destination des équipements motorisés en état de marche sont transmises à ceux-ci, de sorte à ce que les mouvements de ces équipements provoqués par ces commandes produisent à l'équipage des sensations optiques, auditives, et/ou d'accélération.

Dans le contexte du présent document, le terme « interface d'acquisition » désigne tout dispositif permettant à l'équipage (ou seulement à une partie de celui-ci) d'entrer une commande ou une donnée dans un équipement de la tourelle, p.ex. un bouton, une molette, une poignée (en anglais : « joystick »), un clavier, un capteur de mouvement, un microphone avec reconnaissance vocale, etc. Par « interface de restitution », on entend tout dispositif par lequel la tourelle (ou une de ses composantes) peut communiquer dans le sens inverse, c.-à-d. vers l'équipage. Des exemples d'interfaces de restitution sont les écrans, les témoins lumineux, les voyants d'état de système, les haut-parleurs, les signaleurs acoustiques, etc. Il convient de noter que certaines interfaces, les « interfaces combinées », sont à la fois des interfaces d'acquisition que des interfaces de restitution au sens du présent document, p.ex. les écrans tactiles, les poignées à retour d'effort, etc.

Le terme « connecté » signifie, dans le contexte de ce document, « en liaison de communication ». La connexion peut être réalisée par câblage ou sans fil, sauf s'il est autrement précisé dans le contexte.

Par « équipement », on entend tout dispositif ou ensemble de dispositifs faisant partie de la tourelle qui réalise une certaine fonction et, le cas échéant, des fonctions connexes. Un « équipement motorisé » est un équipement actionné par moteur. Le moteur peut faire partie de l'équipement motorisé ou être à part. Sauf indication contraire spécifique, le terme « équipement » peut désigner un équipement motorisé ou non motorisé.

Grâce à l'invention, il est possible aujourd'hui de soumettre des équipages de tourelle à des simulations ayant un niveau de réalisme extrêmement élevé, qui ne pouvait auparavant être atteint autrement que par des manoeuvres sur le terrain. Or, de telles manoeuvres requièrent énormément de temps, de personnes, de matériel et d'espace et ne sont pas sans conséquences sur l'environnement ni sur la durée de vie du matériel employé pour l'entraînement. L'invention permet donc non seulement de réduire de manière importante les coûts de formation par équipage ou par personne mais également d'améliorer significativement le niveau de maîtrise de l'arme. Un avantage supplémentaire de l'invention réside dans le fait que la tourelle ne doit subir aucune modification de ses réglages nécessaires au fonctionnement normal (hors simulation) ce qui évite toute influence du mode de simulation sur le mode de fonctionnement normal.

Il sera apprécié que, de manière tout à fait contraire à l'enseignement des documents EP 0 947 797 A2 et EP 1 715 285 A1, au moins un équipement motorisé de la tourelle, de préférence plusieurs, et plus préférentiellement encore, tous les équipements motorisés, se trouvent en état de marche pendant la simulation et réagissent ainsi par des mouvements aux commandes les concernant entrées par l'équipage. Les mouvements produisent, à leur tour, des effets optiques (visuels), acoustiques (auditifs) et/ou d'accélération ainsi que, chez les membres de l'équipage, les sensations y relatives. Le réalisme de la simulation s'en trouve considérablement amélioré. De préférence, les effets provoqués sont combinaison de plusieurs des effets susmentionnées, p.ex. une combinaison d'effets optiques et auditifs, une combinaison d'effets auditifs et d'accélération, une combinaison d'effets optiques, acoustiques et d'accélération. Les effets d'accélération comprennent, en particulier, les vibrations.

De préférence, l'un ou les plusieurs équipements motorisés de la tourelle se trouvant en état de marche en mode de simulation comprennent un ou plusieurs parmi les suivants : le mécanisme d'élévation du canon, le système de visée, le rack à munitions, le système de rotation de la tourelle, le système de stabilisation de la tourelle et le système d'extraction de fumées.

Bien que ce soit préféré pour le réalisme de la simulation, les équipements motorisés de la tourelle ne sont pas nécessairement tous en état de marche pendant la simulation. P.ex., le mécanisme de rotation azimutal de la tourelle pourrait être bloqué (pour des raisons d'espace, de sécurité ou d'autres). En mode de simulation, la tourelle peut donc comprendre des équipements (motorisés ou non motorisés) désactivés. Toutefois, les équipements désactivés sont de préférence présentés comme opérationnels à l'équipage (sauf en cas de simulation d'une panne d'un équipement). Selon un mode de d'exécution particulièrement réaliste de la simulation, la tourelle est complètement opérationnelle, c.-à-d. tous les équipements (motorisés ou non) sont en état de marche.

Selon un mode de réalisation du procédé de simulation, des commandes entrées par l'équipage via les interfaces d'acquisition à destination d'équipements semblant être en état de marche mais désactivés en réalité sont transmises à l'ordinateur de simulation qui génère une réaction simulée des équipements à ces commandes. La réaction simulée est présentée à l'équipage par le biais des interfaces de restitution.

La tourelle peut comprendre des capteurs qui fournissent des données concernant l'extérieur de la tourelle (p.ex. une caméra, un lidar, un radar, un thermomètre, des capteurs atmosphériques, un système de positionnement par satellite, etc.) en cas de fonctionnement normal de la tourelle. Lorsque la tourelle est utilisée en mode de simulation, l'ordinateur de simulation fournit des données de l'environnement virtuel qui se substituent aux données de tels capteurs. Cela ne signifie pas que ces capteurs sont nécessairement éteints en mode de simulation. P.ex., en mode de simulation, l'ordinateur de contrôle et/ou l'ordinateur de simulation peuvent être configurés à ignorer ou à écraser des données en provenance de capteurs non éteints.

La tourelle peut également comprendre des capteurs qui fonctionnent normalement en mode de simulation et dont les données ne sont pas irrégulières en comparaison avec le fonctionnement normal de la tourelle. En mode de simulation, les données de capteurs qui fonctionnent normalement peuvent être transmises à l'ordinateur de simulation dans le cadre de la communication de l'état de la tourelle, de sorte à ce que l'ordinateur de simulation puisse en tenir compte pour la simulation.

De préférence, s'il y a des capteurs, qui, en mode de simulation, produisent des erreurs ou des données irrégulières en raison d'une désactivation d'un ou de plusieurs équipements, l'ordinateur de simulation fournit des données simulées qui se substituent aux erreurs ou aux données irrégulières de ces capteurs.

Selon l'invention, des mouvements du véhicule blindé portant la tourelle dans l'environnement virtuel sont simulés par l'intermédiaire d'un simulateur du poste de conducteur du véhicule blindé, le simulateur du poste de conducteur étant connecté à l'ordinateur de simulation. Selon l'invention, le simulateur du poste de conducteur se trouve à part du véhicule blindé. Le simulateur du poste de conducteur peut être une réplique (plus ou moins réaliste) du poste de conducteur du véhicule blindé ou, dans une exécution plus simple, un PC (ordinateur personnel) ou une interface simplifiée permettant de piloter la progression du véhicule blindé. Dans cette configuration, le procédé de simulation comprend, d'une part, un volet de simulation embarquée pour l'équipage de la tourelle et, d'autre part, un volet de simulation sur un poste de simulation.

Selon un mode d'exécution avantageux du procédé, l'environnement virtuel généré par l'ordinateur de simulation comprend un avatar de la tourelle et/ou du véhicule blindé, qui est piloté, pendant la simulation, par l'équipage de la tourelle et/ou du véhicule blindé.

L'ordinateur de simulation peut comprendre ou être connecté à un réseau d'ordinateurs de simulation.

Selon un mode d'exécution du procédé de simulation, au moins une autre tourelle de véhicule blindé est fournie et l'ordinateur de simulation est connecté à l'ordinateur de contrôle de l'au moins une autre tourelle. De préférence, toutes les tourelles connectées se partagent le même environnement virtuel et le même scénario. Il est dès lors possible de simuler des exercices impliquant plusieurs véhicules blindés et leurs tourelles. Les équipages peuvent ainsi s'entraîner à agir en formation.

L'ordinateur de simulation peut être connecté à un ou plusieurs postes d'instructeur où les activités de la tourelle sont surveillées et d'où le déroulement de la simulation peut être créé, influencé et/ou enregistré. En cas de simulation en réseau, chaque tourelle ou véhicule blindé peut avoir son instructeur dédié. Le cas échéant, l'enregistrement de la simulation peut être utilisé lors d'un débriefing de l'équipage. Dans le cadre d'un tel débriefing, l'enregistrement (le « film ») de la simulation peut être reproduit devant l'équipage. L'avatar de la tourelle permet dans ce contexte de représenter (de visualiser) les actions menées par l'équipage, qui peuvent être commentées par l'instructeur.

Selon un mode d'exécution préféré du procédé de simulation, les interfaces de restitution comprennent des écrans qui, en cas de fonctionnement normal de la tourelle, affichent les images des caméras de visée, mais qui dans le procédé de simulation affichent des images de l'environnement virtuel, générées en tenant compte de la position et de l'orientation des caméras de visée dans l'environnement virtuel.

L'environnement virtuel produit par l'ordinateur de simulation peut comprendre un environnement géographique, des conditions météorologiques et, éventuellement, des entités ou avatars amis, ennemis ou neutres (p.ex. d'autres véhicules blindés). Les avatars peuvent être pilotés par d'autres participants à un exercice en réseau ou par l'ordinateur de simulation.

Un second aspect de l'invention concerne un système de simulation selon la revendication 11, comprenant une tourelle de véhicule blindé apte à l'utilisation dans le procédé de simulation décrit ci-dessus. Une telle tourelle comprend un ordinateur de contrôle, des équipements, dont un ou plusieurs sont motorisés, ainsi que des interfaces d'acquisition pour la commande des équipements et au moins une interface de restitution pour la présentation de données à l'équipage. L'ordinateur de contrôle est configuré de sorte à mettre, suite à un événement déclencheur, la tourelle dans un mode de simulation dans lequel :
∘ l'ordinateur de contrôle se connecte à un ordinateur de simulation et, en cas de connexion réussie, communique l'état de la tourelle à l'ordinateur de simulation ;
∘ les interfaces de restitution présentent à l'équipage des données d'un environnement virtuel;
∘ un ou plusieurs équipements motorisés de la tourelle se trouvent en état de marche ; et
∘ les commandes entrées par l'équipage via les interfaces d'acquisition
à destination des équipements motorisés en état de marche sont transmises à ceux-ci, de sorte à ce que les mouvements de ces équipements provoqués par ces commandes produisent des effets optiques, auditifs et/ou d'accélération.

Des exemples d'équipements se trouvant en état de marche dans le mode de simulation ont été cités plus haut.

L'événement déclencheur du mode de simulation peut être la détection d'une connexion entre l'ordinateur de contrôle et un boîtier d'interface ou entre l'ordinateur de contrôle et un ordinateur de simulation. De préférence, l'ordinateur de contrôle vérifie l'authenticité du boîtier d'interface de l'ordinateur de simulation avant de mettre la tourelle en mode simulation. L'ordinateur de contrôle peut être configuré de sorte à mettre, suite à la détection d'une déconnexion du boîtier d'interface ou de l'ordinateur de simulation, la tourelle dans son mode de fonctionnement normal.

Selon l'invention, le système de simulation comprend en outre un ordinateur de simulation pour produire l'environnement virtuel et un simulateur du poste de conducteur du véhicule blindé portant la tourelle dans l'environnement virtuel, le simulateur du poste de conducteur étant localisé à part du véhicule blindé (et de la tourelle) et connecté à l'ordinateur de simulation.

### Brève description des dessins

D'autres particularités et caractéristiques de l'invention ressortiront de la description détaillée de certains modes de réalisation avantageux présentés ci-dessous, à titre d'illustration, avec référence aux dessins annexés qui montrent :
Fig. 1: Un schéma illustrant le système de communication d'une tourelle connectée à un ordinateur de simulation ;
Fig. 2: Un schéma très simplifié de plusieurs tourelles, simulateurs de poste de conduite et de postes d'instructeur connectés en réseau ;
Fig. 3: Un schéma plus détaillé d'un exemple de réseau de la figure 2.

### Description détaillée de modes de réalisation de l'invention

Les simulateurs de tourelle connus dans l'état de la technique ont tous certains inconvénients, car l'immersion de l'équipage dans le scénario de l'exercice n'est pas complète. Les simulateurs sur PC ont le désavantage que les membres de l'équipage ne travaillent pas dans les conditions qui règnent à l'intérieur d'une tourelle et ne peuvent pas se familiariser au temps de la simulation avec les particularités qu'implique la véritable manipulation du matériel de la tourelle. Les simulateurs embarqués existants, par contre, ont un niveau de réalisme qui laisse à désirer. Un équipage ne peut donc s'imprégner totalement des conditions d'étroitesse et de stress rencontrées en cas de conflit réel, vu que les insuffisances des simulations actuelles laissent trop de place à l'imagination.

Le mode d'exécution de l'invention discuté par la suite concerne un système et un procédé de simulation pour la formation et l'entraînement d'un équipage à l'utilisation d'une tourelle montée sur un véhicule blindé.

Afin de pouvoir exploiter des ressources matérielles dormantes et atteindre un niveau de réalisme inégalé à ce jour, on utilise une tourelle réelle en état de marche et non pas une réplique. La tourelle est connectée à un ordinateur de simulation, qui fournit une réalité virtuelle dans laquelle se déroule l'exercice et l'équipage pilote un avatar du véhicule blindé avec sa tourelle. Alors que la tourelle devient l'interface avec cette réalité virtuelle pour l'équipage de la tourelle (typiquement un commandant et un tireur), le conducteur du véhicule blindé portant la tourelle prend place sur un poste de simulation à part, d'où il commande les fonctions propres au véhicule, tout en étant acteur dans l'exercice de simulation en interagissant avec les membres de l'équipage de la tourelle. Pendant une simulation, l'équipage se trouve confiné à l'intérieur de la tourelle et est exposé aux stimulus qui résultent, d'une part, de la présentation de l'environnement virtuel et, d'autre part, de l'interaction avec les vrais équipements de la tourelle, dont certains, de préférence la plupart et, éventuellement, tous, sont en état de marche. Dans le cadre de cette illustration de l'invention, il sera supposé que les équipements motorisés en état de marche comprennent, notamment : le mécanisme d'élévation du canon, le système de visée, le rack à munitions, et le système d'extraction de fumées. Comme ils sont en état de marche, la manipulation de ces équipements n'implique aucune différence pour l'équipage par rapport au fonctionnement normal de la tourelle. En particulier, ces équipements produisent les bruits et vibrations habituelles, que l'équipage peut dès lors ressentir et qui contribuent au réalisme de l'exercice.

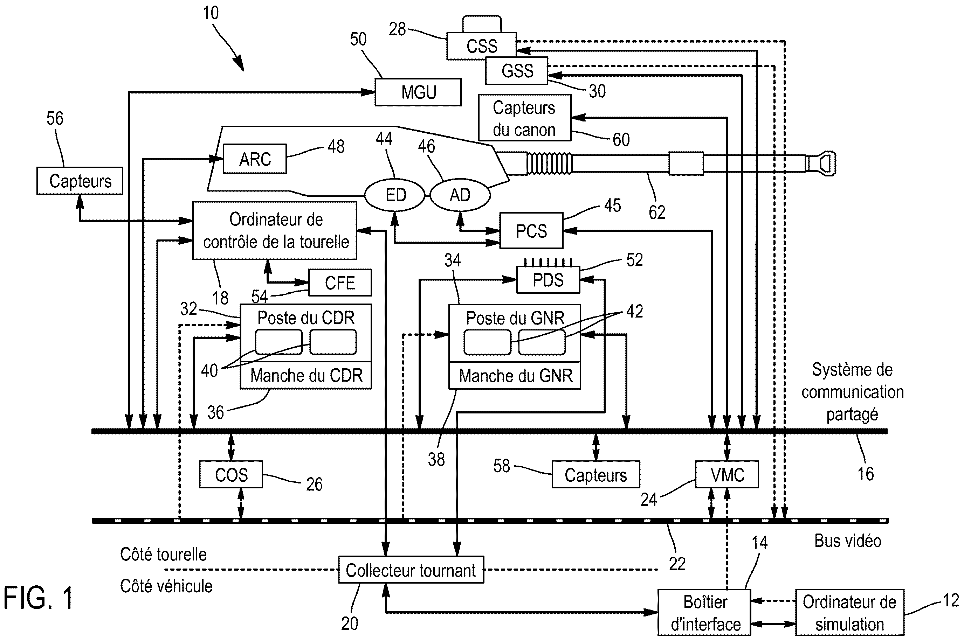

La figure 1 montre, de manière schématique, comment la tourelle 10 est connectée à l'ordinateur de simulation 12. Le passage de la tourelle 10 du mode de fonctionnement normal à un mode « simulateur » s'opère par l'intermédiaire d'un boîtier d'interface 14, qui est connecté au système de communication partagé 16 (au bus informatique) de la tourelle 10 et qui relie celle-ci à l'ordinateur de simulation 12.

Dans l'exemple illustré à la figure 1, le boîtier d'interface 14, ou SEI (« Simulator Embedded Interface »), est connecté à l'ordinateur de contrôle 18 (TNC, « turret network controller ») via le collecteur tournant 20 de la tourelle 10. L'ordinateur de simulation 12 peut donc « écouter » tous les messages qui sont échangés sur le système de communication partagé 16 et y injecter ses propres messages via l'ordinateur de contrôle 18. Le boîtier d'interface 14 est également connecté au bus vidéo 22 de la tourelle 10 par l'intermédiaire d'un multiplexeur vidéo 24 (VMC, « video matrix controller »). Cette connexion vidéo large bande est utilisée par l'ordinateur de simulation pour injecter des images de l'environnement virtuel, destinés à se substituer aux images fournies par les caméras 26, 28, 30 de la tourelle 10.

La tourelle 10 comprend divers équipements contrôlés ou surveillés par l'ordinateur de contrôle 18, des interfaces d'acquisition et des interfaces de restitution. Les interfaces d'acquisition comprennent, dans l'exemple de la figure 1, tous les boutons, molettes, etc., du poste du commandant 32 (CDR, « commander ») et du poste du tireur 34 (GNR, « gunner »), notamment les poignées de commande de tourelle 36 et 38 respectifs. Les interfaces de restitution comprennent, dans cet exemple, notamment les écrans 40, 42 aux postes 32, 34 du commandant, respectivement du tireur. Les équipements de la tourelle 10 comprennent, dans l'exemple illustré, le mécanisme d'élévation du canon 44 (ED, « élévation drive »), le mécanisme de rotation azimutale du canon 46 (AD, « azimuth drive »), tous les deux couplés à un système de contrôle de puissance 45 (PCS, « power control system »), un système du contrôleur du rack à munition 48 (ARC, « ammunition rack control »), un système de guidage de missiles 50 (MGU, « missile guidance unit »), un système de distribution de puissance 52 (PDS, « power distribution system »), un ou plusieurs équipements fournis par le client 54 (CFE, « customer furnished equipment »), ainsi que différents capteurs 56, 58, 60, 26, 28, 30 qui peuvent être connectés au bus informatique 16 ou directement à l'ordinateur de contrôle 18.

En fonctionnement normal de la tourelle 10, les écrans 40, 42 sont employés pour afficher les images fournies par les différentes caméras, qui comprennent la caméra 28 du système de visée du commandant (CSS, « commander sight system »), la caméra 30 du système de visée du tireur (GSS, « gunner sight system ») et une ou plusieurs caméras d'observation de proximité 26 (COS, « close observation system »). Les données vidéo circulent sur le bus vidéo 22 sous le contrôle du multiplexeur vidéo 24, qui est lui-même contrôlé par l'ordinateur de contrôle 18 de la tourelle 10.

Les capteurs qui, en cas de fonctionnement normal de la tourelle 10, fournissent des données sur l'environnement extérieur de la tourelle comprennent, entre autres, les caméras 26, 28, 30. Lorsque la tourelle 10 est utilisée en mode de simulation, l'ordinateur de simulation 12 fournit des images de l'environnement virtuel qui se substituent aux images de ces caméras 26, 28, 30. A cette fin, l'ordinateur de simulation génère les images de synthèse de l'environnement virtuel en tenant compte de la position et de l'orientation de la tourelle 10 dans le terrain de simulation et de la position et de l'orientation des caméras dans le référentiel de la tourelle 10. Les vidéos ainsi obtenues sont encodés dans le format vidéo utilisé par la tourelle et mis sur le bus vidéo 22 de la tourelle via le multiplexeur vidéo 24. En mode de simulation, l'ordinateur de contrôle 18 commute, à l'aide du multiplexeur vidéo 24, les différentes vidéos fournies par l'ordinateur de simulation 12 sur les canaux écoutés par les différents écrans 40, 42 et par les systèmes de visée CSS/GSS, de sorte à remplacer les vidéos fournies par les caméras 26, 28, 30. Les caméras 26, 28, 30 peuvent être éteintes par l'ordinateur de contrôle 18 en mode de simulation. Si toutefois elles restent actives, les vidéos qu'elles produisent sont ignorées.

En ce qui concerne les autres capteurs qui fournissent des données sur l'extérieur de la tourelle 10, leurs données sont également remplacées par des données sur l'environnement virtuel produites par l'ordinateur de simulation 12. Comme les caméras 26, 28, 30, ces capteurs peuvent être éteints en mode de simulation. Si certains d'entre eux restent actifs en mode de simulation, l'ordinateur de contrôle 18 empêche les données en provenance de ces capteurs d'être pris en compte par un équipement de la tourelle et les remplace par les données respectives de l'ordinateur de simulation 12.

La tourelle 10 comprend d'autres capteurs qui fonctionnent normalement en mode de simulation, parce que les grandeurs physiques qu'ils surveillent ne dépendent pas de l'environnement extérieur. On trouve de tels capteurs notamment dans les interfaces d'acquisition et dans certains équipements (motorisés ou non), p.ex. pour déterminer la position d'une pièce mobile, la température à un certain endroit, un niveau d'un fluide, etc. En mode de simulation, les données de ces capteurs sont transmises à l'ordinateur de simulation 12 qui en tient compte pour la simulation. Par exemple, grâce à de telles données, l'ordinateur de simulation 12 est informé de l'état de la tourelle 10, y compris notamment la position et l'orientation de la tourelle 10, l'élévation du canon 62 ainsi que la position et l'orientation des caméras 26, 28, 30.

Le mode de simulation est automatiquement déclenché par l'ordinateur de contrôle 18 lorsqu'il détecte que le boîtier d'interface 14 est branché. Le basculement du mode de fonctionnement normal au mode au simulateur, et inversement, s'opère dès lors très rapidement par le fait de connecter ou de déconnecter le boîtier d'interface 14. En passant en mode de simulation, l'ordinateur de contrôle tente de se connecter à l'ordinateur de simulation 12. Une fois la connexion établie, il se synchronise avec l'ordinateur de simulation 12. Il désactive également tous les équipements qui ne sont pas censés fonctionner en mode de simulation. En particulier, pour des raisons de sécurité, l'ordinateur de contrôle 18 inhibe le tir. Toutefois, comme décrit plus haut, certains équipements motorisés, notamment le mécanisme d'élévation du canon, le système de visée, le rack à munitions et le système d'extraction de fumées, restent ou sont mis en état de marche par l'ordinateur de contrôle 18. On note que la désactivation ou l'activation de certains équipements peut dépendre du type d'armement de la tourelle. Par exemple, un canon grand calibre est typiquement chargé au moyen d'un rack motorisé alors qu'un canon moyen calibre comprend un rack passif (non motorisé). De préférence, un rack de munition motorisé se trouve en état de marche pendant la simulation, même s'il ne transporte pas de munition (pour la simulation on peut également utiliser de la munition factice). Un canon moyen calibre peut cycler à vide pendant la simulation. Finalement, l'ordinateur de contrôle 18 modifie le paramétrage de la tourelle de façon à ce que la communication à partir de ou vers des équipements désactivés soit prise en charge, respectivement déviée vers l'ordinateur de simulation 12.

En conséquence, l'équipage de la tourelle est confronté à une réalité virtuelle qui comprend des conditions extérieures réalistes de terrain ainsi que des conditions atmosphériques/climatiques (visibilité, vent, pluie,...). En outre, la tourelle se présente à l'équipage dans son état opérationnel. Les équipements réagissent, ou semblent réagir, aux actions de l'équipage comme si la tourelle se trouvait réellement sur le terrain virtuel. En particulier, les équipements motorisés en état de marche produisent les stimulus, notamment les bruits, les vibrations et les impressions visuelles auxquels l'équipage s'attend en actionnant ces équipements. Par exemple, une fois que le système de visée est verrouillé sur une cible (virtuelle) il obligera le système d'orientation du canon à suivre la cible. Si le véhicule portant la tourelle est (virtuellement) en mouvement, le système d'orientation du canon compensera le mouvement (virtuel) du véhicule par un mouvement réel, qui est perceptible par l'équipage.

Pour encore plus de réalisme, il est possible d'utiliser des interfaces de restitution supplémentaires, non compris dans les équipements de la tourelle. P.ex. il serait possible de monter la tourelle sur une table qui génère des vibrations simulant le mouvement de la tourelle dans l'environnement virtuel, ou des vibrations résultant des conditions météorologiques virtuelles, etc.

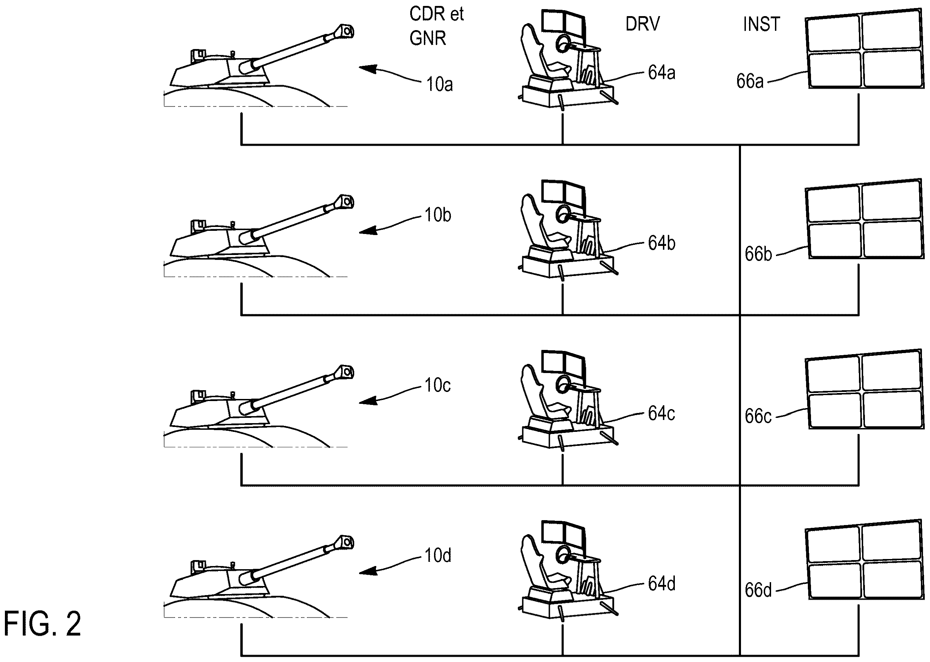

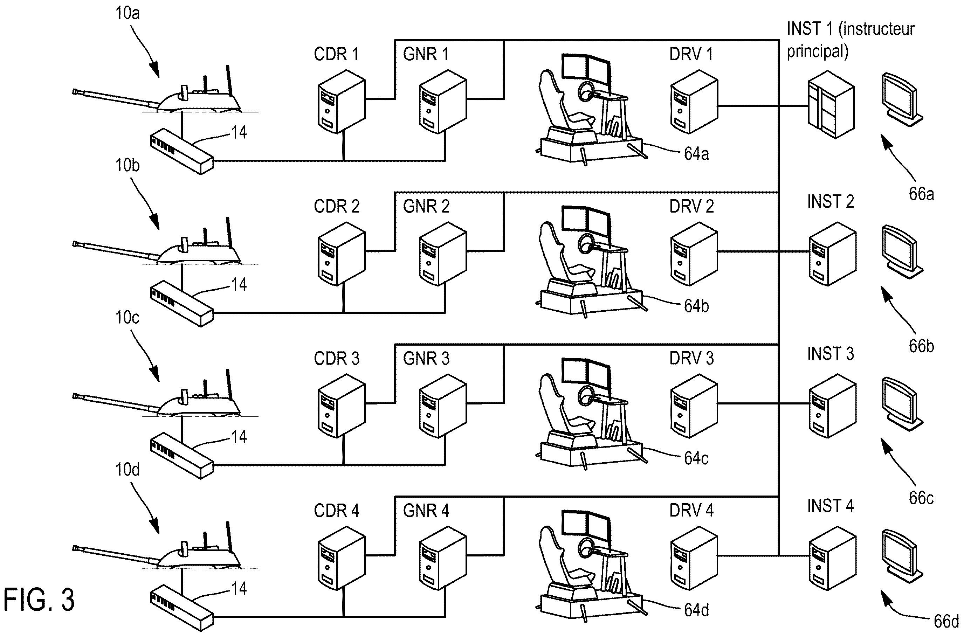

Les figures 2 et 3 montrent plusieurs tourelles 10a, 10b, 10c, 10d, des simulateurs de poste de conducteur 64a, 64b, 64c, 64d et des postes d'instructeur 66a, 66b, 66c, 66d connectés en réseau. L'ordinateur de simulation ou le réseau d'ordinateurs de simulation n'est pas montré à la figure 2, mais une architecture possible du système est illustrée à la figure 3. A chaque tourelle est associé un simulateur de poste de conducteur, à partir duquel l'avatar du véhicule blindé est piloté dans la réalité virtuelle générée par le ou les ordinateurs de simulation. Les actions de l'équipage de chaque véhicule blindé, c.-à-d., dans l'exemple illustré, du commandant et du tireur installés dans la tourelle et du conducteur (DRV, « driver ») installé dans le simulateur associé, peuvent être surveillées par un instructeur (INST, « instructor ») depuis le poste d'instructeur respectif. L'instructeur a en outre la possibilité d'influencer le déroulement de la simulation, p.ex. en donnant des ordres à l'équipage, en déclenchant des actions de l'ennemi, en provoquant des pannes, etc.

Toutes les tourelles, simulateurs et postes d'instructeur peuvent se partager le même environnement virtuel et le même scénario. De cette manière, il est possible de mener des manoeuvres virtuelles ayant un niveau de réalisme extrêmement élevé. L'environnement virtuel comprend un terrain (y compris la faune, la flore et d'éventuelles constructions), des conditions météorologiques (vent, précipitations, visibilité, etc.), les avatars des véhicules blindés et éventuellement d'autres avatars pilotés par l'intelligence artificielle.

La figure 3 montre une architecture de réseau possible. Un ordinateur de simulation maître, p.ex. celui de l'instructeur principal INST 1, génère les paramètres qui définissent un environnement virtuel partagé par tous les membres du réseau. Les calculs de la simulation sont répartis sur plusieurs ordinateurs synchronisés entre eux. Ainsi, chaque simulateur de poste de conducteur comprend un ordinateur dédié. Dans le réseau illustré, il y a également un ordinateur de simulation pour chaque poste de commandant et pour chaque poste de tireur. De cette manière, notamment les calculs de rendu de la partie de l'environnement virtuel vu par chaque membre de l'équipage peuvent être distribués de manière efficace, et un niveau de réalisme visuel peut être atteint. Il convient toutefois de noter que l'on peut réunir les tâches de plusieurs ordinateurs dans un seul ordinateur si la puissance de calcul de ce dernier est suffisante.

Alors que des modes de réalisation particuliers viennent d'être décrits en détail, l'homme du métier appréciera que diverses modifications et alternatives à ceux-là puissent être développées à la lumière de l'enseignement global apporté par la présente divulgation de l'invention. Par conséquent, les agencements et/ou procédés spécifiques décrits ci-dedans sont censés être donnés uniquement à titre d'illustration, sans intention de limiter la portée de l'invention, qui est déterminée par l'étendue des revendications rattachées.

## Revendications

1. Procédé de simulation immersive pour la formation et l'entraînement d'un équipage à l'utilisation d'une tourelle (10) de véhicule blindé, le procédé comprenant les étapes suivantes :
une tourelle (10) de véhicule blindé est fournie, ladite tourelle (10) comprenant un ordinateur de contrôle (18), ainsi que des interfaces d'acquisition (36, 38) pour la commande d'équipements de la tourelle (10) et des interfaces de restitution (40. 42) pour la présentation de données à l'équipage, l'ordinateur de contrôle ainsi que les interfaces d'acquisition et les interfaces de restitution étant connectés entre eux par un bus informatique (16) :
l'ordinateur de contrôle est connecté à un ordinateur de simulation (12), auquel l'ordinateur de contrôle communique l'état de la tourelle ;
l'ordinateur de simulation produit un environnement virtuel qui est présenté au moins en partie à l'équipage par le biais des interfaces de restitution ;
un ou plusieurs équipements motorisés de la tourelle se trouvent en état de marche ; et
les commandes entrées par l'équipage via les interfaces d'acquisition à destination des équipements motorisés en état de marche sont transmises à ceux-ci, les mouvements de ces équipements provoqués par ces commandes produisant à l'équipage des sensations optiques, auditives et/ou d'accélération ;
le procédé comprenant en outre la simulation des mouvements du véhicule blindé portant la tourelle dans ledit environnement virtuel par l'intermédiaire d'un simulateur (64a-64d) du poste de conducteur dudit véhicule blindé, le simulateur du poste de conducteur se trouvant à part dudit véhicule blindé et étant connecté à l'ordinateur de simulation.

2. Procédé selon la revendication 1, dans lequel
les commandes entrées par l'équipage via les interfaces d'acquisition à destination d'équipements semblant être en état de marche mais désactivés en réalité sont transmises à l'ordinateur de simulation qui génère une réaction simulée des équipements à ces commandes ; et
ladite réaction simulée est présentée à l'équipage par le biais des interfaces de restitution.

3. Procédé selon la revendication 1 ou 2, dans lequel l'ordinateur de simulation fournit des données de l'environnement virtuel qui se substituent à des données de capteurs, qui, en cas de fonctionnement normal de la tourelle, fournissent des données concernant l'extérieur de la tourelle.

4. Procédé selon l'une quelconque des revendications 1 à 3, dans lequel des données de capteurs qui fonctionnent normalement sont transmises à l'ordinateur de simulation dans le cadre de la communication de l'état de la tourelle.

5. Procédé selon l'une quelconque des revendications 1 à 4, dans lequel l'ordinateur de simulation fournit des données simulées qui se substituent à des données de capteurs, qui produisent des erreurs ou des données irrégulières en raison d'une désactivation d'un ou de plusieurs équipements.

6. Procédé selon l'une quelconque des revendications 1 à 5, dans lequel l'ordinateur de simulation comprend ou est connecté à un réseau d'ordinateurs de simulation.

7. Procédé selon l'une quelconque des revendications 1 à 6, dans lequel au moins une autre tourelle de véhicule blindé est fournie et l'ordinateur de simulation est connecté à l'ordinateur de contrôle de l'au moins une autre tourelle, et dans lequel toutes les tourelles se partagent le même environnement virtuel.

8. Procédé selon l'une quelconque des revendications 1 à 7, dans lequel l'ordinateur de simulation est connecté à au moins un poste d'instructeur (66a-66d) où les activités de la tourelle sont surveillées et d'où le déroulement de la simulation peut être influencé.

9. Procédé selon l'une quelconque des revendications 1 à 8, dans lequel les interfaces de restitution comprennent des écrans qui, en cas de fonctionnement normal de la tourelle affichent les images des caméras de visée (28, 30), mais qui dans le procédé de simulation affichent des images de l'environnement virtuel, générées en tenant compte de la position et de l'orientation des caméras de visée dans l'environnement virtuel.

10. Procédé selon l'une quelconque des revendications 1 à 9, dans lequel l'environnement virtuel produit par l'ordinateur de simulation comprend un terrain géographique et des conditions météorologiques.

11. Système de simulation, comprenant :
a. une tourelle (10) de véhicule blindé, la tourelle comprenant un ordinateur de contrôle (18), des équipements, dont un ou plusieurs sont motorisés, ainsi que des interfaces d'acquisition (36, 38) pour la commande des équipements, des interfaces de restitution (40, 42) pour la présentation de données à l'équipage et un bus informatique (16), l'ordinateur de contrôle ainsi que les interfaces d'acquisition et les interfaces de restitution étant connectés entre eux par le bus informatique, l'ordinateur de contrôle étant configuré de sorte à mettre, suite à un événement déclencheur, la tourelle dans un mode de simulation dans lequel
l'ordinateur de contrôle se connecte à un ordinateur de simulation (12) et, en cas de connexion réussie, communique l'état de la tourelle à l'ordinateur de simulation ;
les interfaces de restitution présentent à l'équipage des données d'un environnement virtuel ;
un ou plusieurs des équipements motorisés de la tourelle se trouvent en état de marche ; et
les commandes entrées par l'équipage via les interfaces d'acquisition à destination des équipements motorisés en état de marche sont transmises à ceux-ci, de sorte à ce que les mouvements de ces équipements provoqués par ces commandes produisent des effets optiques, auditifs et/ou d'accélération ;
b. un ordinateur de simulation (12) configuré pour produire ledit environnement virtuel ; et
c. un simulateur (64a-64d) du poste de conducteur du véhicule blindé portant la tourelle dans l'environnement virtuel, le simulateur du poste de conducteur étant localisé à part du véhicule blindé et connecté à l'ordinateur de simulation.

12. Système de simulation selon la revendication 11, dans lequel l'un ou les plusieurs équipements motorisés de la tourelle se trouvant en état de marche dans le mode de simulation comprennent un ou plusieurs parmi le mécanisme (44) d'élévation du canon (62), le système de visée (CSS, GSS), le rack à munitions (48), le système de rotation de la tourelle, le système de stabilisation de la tourelle et le système d'extraction de fumées.

13. Système de simulation selon la revendication 11 ou 12, dans lequel l'événement déclencheur du mode de simulation est la détection d'une connexion entre l'ordinateur de contrôle et un boîtier d'interface ou entre l'ordinateur de contrôle et un ordinateur de simulation.

14. Système de simulation selon la revendication 13, dans lequel l'ordinateur de contrôle est configuré de sorte à mettre, suite à la détection d'une déconnexion du boîtier d'interface ou de l'ordinateur de simulation, la tourelle dans un mode de fonctionnement normal.

## Patentansprüche

1. Immersives Simulationsverfahren zur Ausbildung und zum Training einer Besatzung in der Nutzung eines Türmchens (10) eines Panzerfahrzeugs, wobei das Verfahren die folgenden Schritte umfasst:
ein Türmchen (10) eines Panzerfahrzeugs ist vorgesehen, das Türmchen (10) umfasst einen Rechner (18) sowie eine Erfassungsschnittstellung (36, 38) zur Steuerung von Ausrüstungen des Türmchens (10) und eine Rückkopplungsschnittstelle (40, 42), um der Besatzung Daten anzuzeigen, wobei der Rechner und die Erfassungs- und Rückkopplungsschnittstellen über einen Bus (16) verbunden sind; der Rechner ist an einen Simulationscomputer (12) angeschlossen, dem der Rechner den Zustand des Türmchens mitteilt;
der Simulationscomputer erzeugt eine virtuelle Umgebung, die über die Rückkopplungsschnittstellen mindestens teilweise der Besatzung präsentiert wird,
mindestens eine motorisierte Ausrüstung des Türmchens befindet sich im Betriebszustand und die von der Besatzung über die Erfassungsschnittstellen eingegebenen Befehle an die im Betriebszustand befindlichen motorisierten Ausrüstungen werden diesen übertragen, wobei die von diesen Befehlen veranlassten Bewegungen dieser Ausfrüstungen optische, akustische und/oder Beschleunigungswahrnehmungen bei der Besatzung hervorrufen,
wobei das Verfahren ferner umfasst: Simulieren der Bewegungen des das Türmchen tragenden Fahrzeugs in der virtuellen Umgebung mittels eines Simulators (64a - 64d) des Fahrersitzes des Panzerfahrzeugs, wobei der Fahrersitzsimulator sich außerhalb des Panzerfahrzeugs befindet und an den Simulationscomputer angeschlossen ist.

2. Verfahren nach Anspruch 1, wobei:
die von der Besatzung über die Erfassungsschnittstelle eingegebenen Befehle an Ausrüstungen,
die sich anscheinend im Betriebszustand befinden aber in Wirklichkeit deaktiviert sind, dem Simulationscomputer zugeführt werden, der eine simulierte Reaktion der Ausrüstungen auf diese Befehle erzeugt, und
die simulierte Reaktion der Besatzung über die Rückkopplungsschnittstellen präsentiert wird.

3. Verfahren nach Anspruch 1 oder 2, wobei der Simulationscomputer Daten der virtuellen Umgebung bereitstellt, die an die Stelle der Sensordaten treten, die bei normalem Betrieb des Türmchens Daten über die Außenseite des Türmchens bereitstellen.

4. Verfahren nach einem der Ansprüche 1 - 3, wobei die Daten normal funktionierender Sensoren im Rahmen der Mitteilung des Zustands des Türmchens an den Simulationscomputer übertragen werden.

5. Verfahren nach einem der Ansprüche 1 - 4, wobei:
der Simulationscomputer simulierte Daten bereitstellt, die an die Stelle von Sensordaten treten, die infolge einer Desaktivation einer oder mehrerer Ausrüstungen Fehler oder anomale Daten erzeugen.

6. Verfahren nach einem der Ansprüche 1 - 5, wobei:
der Simulationscomputer ein Simulationscomputernetzwerk umfasst oder an dieses angeschlossen ist.

7. Verfahren nach einem der Ansprüche 1 - 6, in dem mindestens ein weiteres Türmchen eines Panzerfahrzeig vorgesehen ist und wobei der Simulationscomputer an den Rechner des mindestens weiteren Türmchens angeschlossen ist, und wobei sich alle Türmchen eine virtuelle Umgebung teilen.

8. Verfahren nach einem der Ansprüche 1 - 7, wobei:
der Simulationscomputer an mindestens einen Ausbilderplatz (66a - 66d) angeschlossen ist, wo die Aktivitäten des Türmchens beaufsichtigt werden und von dem aus der Verlauf der Simulation beeinflusst werden kann.

9. Verfahren nach einem der Ansprüche 1 - 8, wobei die Rückkopplungsschnittstellen Bildschirme umfassen, die bei normalem Betrieb des Türmchens die Bilder der Zielkameras (28, 30) anzeigen, aber im Simulationsbetrieb Bilder der virtuellen Umgebung anzeigen, die unter Berücksichtigung der Lage und Ausrichtung der Zielkameras in der virtuellen Umgebung erstellt werden.

10. Verfahren nach einem der Ansprüche 1 - 9, wobei die vom Simulationscomputer erstellte virtuelle Umgebung ein geographisches Gelände und meteorologische Bedingungen umfasst.

11. Simulationssystem, umfassend:
a. ein Türmchen (10) eines Panzerfahrzeugs, wobei das Türmchen einen Rechner (18), Ausrüstungen, von denen mindestens eine motorisiert ist, sowie Erfassungsschnittstellen (36, 38) zur Steuerung der Ausrüstungen, Rückkopplungsschnittstellen (40, 42) zur Anzeige von Daten an die Besatzung und einen Bus (16) umfasst,
wobei der Rechner und die Erfassungs- und Rückkopplungsschnittstellen über einen Bus verbunden sind,
wobei der Rechner derart konfiguriert ist, dass er im Anschluss an ein Triggerereignis das Türmchen in einen Simulationsbetrieb versetzt, in dem der Rechner sich einem Simulationscomputer (12) anschließt und
bei erfolgreichem Anschluss den Zustand des Türmchens dem Simulationscomputer mitteilt,
die Rückkopplungsschnittstellen der Besatzung Daten einer virtuellen Umgebung präsentieren, mindestens eine motorisierte Ausrüstung des Türmchens sich im Betriebszustand befindet und die von der Besatzung über die Erfassungsschnittstellen eingegebenen Befehle an die im Betriebszustand befindlichen motorisierten Ausrüstungen diesen übertragen werden, sodass die von diesen Befehlen veranlassten Bewegungen dieser Ausfrüstungen optische, akustische und/oder Beschleunigungswahrnehmungen bei der Besatzung hervorrufen,
b. einen Simulationscomputer (12), der derart konfiguriert ist, dass er die virtuelle Umgebung erstellt, und
c. einen Fahrersitzsimulator (64a - 64d) des das Türmchen tragenden Panzerfahrzeugs in der virtuellen Umgebung, wobei der Fahrersitzsimulator sich außerhalb des Panzerfahrzeugs befindet und an den Simulationscomputer angeschlossen ist.

12. Simulationssystem nach Anspruch 11, wobei die mindestens eine motorisierte Ausrüstung des Türmchens, die sich im Simulationsbetrieb im Betriebszustand befindet, mindestens eine der Hebevorrichtung (44) des Geschützes (62), des Zielsystems (CSS, GSS), des Munitionsgestells (48), des Rotationssystems des Türmchens, des Stabilisationssystems des Türmchens und des Rauchgasextraktionssystems umfasst.

13. Simulationssystem nach Anspruch 11 oder 12, wobei das Triggerereignis des Simulationsbetriebs die Erkennung einer Verbindung zwischen dem Rechner und einem Schnittstellengehäuse oder zwischen dem Rechner und einem Simulationscomputer ist.

14. Simulationssystem nach Anspruch 13, wobei der Rechner derart konfiguriert ist, dass er im Anschluss an die Erkennung der Trennung des Schnittstellengehäuses oder des Simulationscomputers das Türmchen in den normalen Betriebszustand versetzt.

## Claims

1. An immersive simulation method for coaching and training a crew in the use of an armoured vehicle turret (10), the method comprising the following :
an armoured vehicle turret (10) is provided, the turret comprising a control computer (18), as well as acquisition interfaces (36,38) for commanding equipment units of the turret (10) and rendering interfaces (40,42) for the presentation of data to the crew, the control computer as well as the acquisition interfaces and the rendering interfaces being connected to each other by means of a computer bus (16);
the control computer is connected to a simulation computer (12), to which the control computer communicates the status of the turret;
the simulation computer produces a virtual environment which is presented at least in part to the crew by means of the rendering interfaces;
one or more motorised equipment units of the turret are in operation; and
the commands entered by the crew via the acquisition interfaces to the motorised equipment units that are in operation are transmitted to the latter, the movements of these equipment units that are brought about by these commands inducing in the crew sensations of an optical or auditory nature, and/or of acceleration;
the method further comprising the simulation of the movements of the armoured vehicle bearing the turret in said virtual environment by means of a simulator (64a-64d) for the driver station of said armoured vehicle, the simulator for the driver station being located apart from said armoured vehicle and being connected to the simulation computer.

2. The method according to claim 1, in which
the commands entered by the crew via the acquisition interfaces to the equipment units that seem to be in operation but are in fact deactivated are transmitted to the simulation computer that generates a simulated reaction of the equipment units to these commands; and
said simulated reaction is presented to the crew by means of the rendering interfaces.

3. The method according to claim 1 or 2, in which the simulation computer provides data pertaining to the virtual environment that replace data from sensors, which, if the turret functions normally, provide data pertaining to the exterior of the turret.

4. The method according to any one of claims 1 to 3, in which data from sensors that operate normally are transmitted to the simulation computer in the context of the communication of the status of the turret.

5. The method according to any one of claims 1 to 4, in which the simulation computer provides simulated data which replace data from sensors, which produce errors or irregular data on account of the deactivation of one or more equipment units.

6. The method according to any one of claims 1 to 5, in which the simulation computer comprises or is connected to a network of simulation computers.

7. The method according to any one of claims 1 to 6, in which at least one other vechicle turret is provided and the simulation computer is connected to the control computer of the at least another turret, and in which all the turrets share the same virtual environment.

8. The method according to any one of claims 1 to 7, in which the simulation computer is connected to at least one instructor station (66a-66d) where the activities of the turret are monitored and from where the course of the simulation may be influenced.

9. The method according to any one of claims 1 to 8, in which the rendering interfaces comprise screens, which, in case of normal operation of the turret, display the images from the sight cameras (28,30), but which in the simulation method display images of the virtual environment, which are generated taking into account the position and orientation of the sight cameras in the virtual environment.

10. The method according to any one of claims 1 to 9, in which the virtual environment produced by the simulation computer comprises a geographical terrain and meteorological conditions.

11. A simulation system, comprising :
a) an armoured vehicle turret (10) comprising a control computer (18), equipment units, of which one or more are motorised, as well as acquisition interfaces (36,38) for commanding the equipment units, rendering interfaces (40,42) for the presentation of data to the crew and a computer bus (16), the control computer as well as the acquisition interfaces and the rendering interfaces being connected to each other by the computer bus, the control computer being configured so as to place the turret, following a triggering event, in a simulation mode in which:
the control computer connects to a simulation computer (12), and if the connection is successfully established, communicates the status of the turret to the simulation computer;
the rendering interfaces present to the crew data relating to a virtual environment; one or more motorised equipment units of the turret are in operation; and
the commands entered by the crew via the acquisition interfaces to the motorised equipment units that are in operation are transmitted to the latter, such that the movements of these equipment units that are brought about by these commands produce effects of an optical or auditory nature, and/or of acceleration;
b) a simulation computer (12) configured to produce said virtual environment; and
c) a simulator (64a-64d) for the driver station of the armoured vehicle bearing the turret in the virtual environment, the simulator for the driver station being located apart from the armoured vehicle and connected to the simulation computer.

12. The simulation system according to claim 11, in which one of the motorised equipment units of the turret that are in operation in simulation mode or a plurality of them comprise one or more from among the cannon (62) elevation mechanism (44), the sight system, the ammunition rack (48), the turret rotation system, the turret stabilisation system and the smoke extraction system.

13. The simulation system according to claim 11 or 12, in which the triggering event of the simulation mode is the detection of a connection between the control computer and an interface box or between the control computer and a simulation computer.

14. The simulation system according to claim 13, in which the control computer is configured so as to place the turret, following the detection of a disconnection of the interface box or of the simulation computer, back into a normal operating mode.
